# DEMANDE DE BREVET EUROPEEN

(11) **EP 0 665 494 A1**
(43) Date de publication de la demande: **02.08.1995**
(21) Numéro de dépôt: 94402986.7
(22) Date de dépôt: 22.12.1994
(51) Int. Cl.: G06F 9/46

(54) **Circuit décodeur insensible à la fluctuation de tension d'alimentation**

(30) Priorité: 31.12.1993 FR 9315957
(71) Demandeur: BULL S.A., F-78430 Louveciennes (FR)
(72) Inventeur: Bassier, Jean-François, F-94370 Sucy en Brie (FR); Sitbon, Gérard, F-94370 Vitry sur Seine (FR); Aydin, Alev, F-78990 Elancourt (FR); Freund, Hubert, F-75010 Paris (FR)

(57) **Abrégé**

L'invention concerne un procédé de simulation, dans un réseau, d'une architecture "serveur" à partir d'une architecture "client" d'une première machine (PS) pour l'exécution d'appels de procédure à distance RPC émis par au moins une machine d'architecture "client" (CL). Selon ce procédé la première machine (PS) émet préalablement un appel RPC vers une troisième machine d'architecture "serveur" (RE) utilisée comme machine relais entre la première (PS) et la deuxième (CL) machines, cet appel RPC ouvrant un contexte de communication pour la suite des échanges alors que la première machine (PS) se bloque dans l'attente d'un retour de l'appel RPC. Lorsque la seconde machine (CL) émet un appel RPC représentatif d'une fonction déterminée à exécuter par la première machine (PS), cet appel est transmis vers la machine relais (RE) qui après reconnaissance de la fonction le retransmet vers la première machine (PS) par retour de l'appel RPC bloqué. La première machine (PS) demande alors les paramètres d'entrée de la fonction à exécuter connus de la machine relais (RE) puis exécute la fonction dès leur réception en fournissant comme paramètre de sortie le résultat à la seconde machine (CL) via la machine relais (RE).

## Description

La présente invention concerne un procédé de simulation, dans un réseau, d'une architecture "serveur" à partir d'une architecture "client" d'une première machine pour l'exécution d'appels de procédure à distance RPC (Remote Procedure Call) émis par au moins une seconde machine d'architecture "client".

De manière générale, le service d'appels de procédure à distance RPC fournit un langage de niveau élevé et permet aux programmes exécutés localement d'appeler des procédures installées sur des systèmes à distance. Ce service constitue un élément fondamental du modèle "client-serveur". Ce modèle est un modèle informatique asymétrique constitué de deux unités séparées et logiques travaillant en coopération. Une machine d'architecture "client", communément appelée "client", demande des informations ou des actions qu'une machine d'architecture "serveur" peut exécuter plus spécifiquement ou dans de meilleures conditions. La machine d'architecture "serveur", communément appelée "serveur", répond aux demandes du "client" et exécute des tâches lourdes ou spécialisées.

Dans ce contexte, il peut être ressenti le besoin d'utiliser une machine d'architecture exclusivement "client" comme "serveur". La solution à ce problème consistait, jusqu'à présent, à porter une partie "serveur" sur la machine "client", c'est-à-dire à reproduire l'intégralité du code source d'une partie "serveur". Une telle solution est longue et fastidieuse et par conséquent coûteuse et ceci d'autant plus que plusieurs versions peuvent se succéder à brève échéance et que de plus le code peut être malaisé à porter sur des systèmes propriétaires.

La présente invention a pour but de remédier aux inconvénients précités et propose un procédé de simulation d'une architecture "serveur" à partir d'une architecture "client" qui ne nécessite pas une recopie d'une partie "serveur" et qui par conséquent est peu onéreux et rapide à mettre en oeuvre.

Pour cela le procédé de simulation mentionné dans le préambule est remarquable en ce que la première machine émet préalablement un appel RPC vers une troisième machine d'architecture "serveur" utilisée entre la première et la deuxième machines et pour cela appelée machine relais, cet appel RPC ouvrant un contexte de communication (appelé "client context" par l'homme du métier dans un environnement d'information répartie et selon la sémantique de DCE, DCE (Distributed Computing Environment) étant une marque déposée par Open Software Foundation) pour la suite des échanges alors que ladite première machine se bloque sur ledit appel dans l'attente de son retour, puis lorsque la seconde machine émet un appel RPC représentatif d'une fonction déterminée à exécuter par la première machine, cet appel est transmis vers la machine relais qui après reconnaissance de la fonction à exécuter le retransmet vers la première machine par retour de l'appel RPC bloqué, la première machine demandant alors les paramètres d'entrée de la fonction à exécuter présents dans la machine relais puis exécutant ladite fonction après réception desdits paramètres d'entrée et enfin fournissant, comme paramètre de sortie, le résultat à la seconde machine via la machine relais.

Ainsi grâce au procédé de simulation selon l'invention, dans un réseau, une machine "client" peut lancer des appels de procédure RPC vers une autre machine "client" utilisée comme "serveur" ("pseudo-serveur") et ceci sans modification ou recopie du code source d'une partie "serveur", le code "client" est standard, il suffit pour cela de sélectionner un "serveur" du réseau qui servira alors de machine relais et autorisera le dialogue entre la machine "client' et le "pseudo-serveur". En effet, la machine "client" voit alors le couple "serveur"/"pseudo-serveur" comme une machine "serveur" homogène. Dans ces conditions tout appel RPC avec tout type de paramètre peut être exécuté. En outre, de manière générale l'interface de la procédure est décrite dans un langage de description d'interface IDL). Cette interface est compilée en deux talons (appelés "stubs" par l'homme du métier), un pour le côté "client", l'autre pour le côté "serveur" du RPC, les talons étant compilés avec les programmes "client" et "serveur" respectivement pour donner les deux exécutables "client" et "serveur". Le talon "client" est une fonction dont l'interface respecte l'interface décrite en IDL et qui a pour but de transformer les paramètres d'appel de la représentation propre à la machine "client" en une représentation universelle dite représentation de réseau. Le but du talon "serveur" est de transformer les paramètres d'appel de la représentation réseau en la représentation propre à la machine serveur et d'appeler ensuite la fonction effectivement demandée. Selon l'invention, le fonctionnement est automatique et conforme à la représentation réseau, toutes les conversions étant réalisées au niveau du NDR (Network Data Representation). Les talons, qui sont générés par le langage de description de l'interface, sont donc standards. De plus, en ce qui concerne les services de sécurité, les mécanismes de protection éventuels sont également standards.

De manière remarquable, selon le présent procédé de simulation, les étapes suivantes sont chronologiquement parcourues :
- la première machine émet vers une première unité d'exécution de la machine relais un appel RPC (1) signifiant qu'elle est prête pour l'exécution de fonctions, l'unité d'exécution de la machine relais qui gère cet appel RPC (1) se met alors en attente d'un signal de réveil et bloque ainsi la première machine sur cet appel RPC (1),
- la machine relais informe le service de nommage que la première machine est prête à exécuter une fonction désirée,
- la seconde machine va chercher dans un répertoire du service de nommage l'adresse de la fonction à exécuter,
- la seconde machine émet alors un appel RPC (2), conforme à la représentation réseau, correspondant à la fonction à exécuter et comportant les paramètres d'entrée et de sortie de ladite fonction, vers une seconde unité d'exécution de la machine relais, cette unité d'exécution se mettant en attente d'un signal de réveil et bloquant ainsi la seconde machine sur cet appel RPC(2) après avoir elle-même émis un signal de réveil vers la première unité d'exécution en attente,
- la première machine est renseignée, par retour de l'appel RPC(1) ainsi débloqué, sur le type de fonction à exécuter,
- la première machine émet un nouvel appel RPC(3), vers la première unité d'exécution de la machine relais, pour demander les paramètres d'entrée de la fonction à exécuter, cette unité d'exécution demandant lesdits paramètres à la seconde unité d'exécution de la machine relais via un mécanisme de communication interprocessus ("sockets", mémoire partagée avec sémaphores, files de messages, tube de communication appelé également "pipe",...) ou intraprocessus (mémoire globale protégée par des verrous par exemple).
- après obtention des paramètres d'entrée de la fonction à exécuter, la première unité d'exécution de la machine relais transmet lesdits paramètres, par retour de l'appel RPC(3), à la première machine qui exécute la fonction,
- la première machine transmet le résultat de la fonction exécutée à la première unité d'exécution de la machine relais qui d'une part le communique à la seconde unité d'exécution via un mécanisme de communication interprocessus ("sockets", mémoire partagée avec sémaphores, files de messages, tube de communication appelé également "pipe",...) ou intraprocessus (mémoire globale protégée par des verrous par exemple) et d'autre part émet un signal de réveil vers cette seconde unité d'exécution,
- la seconde unité d'exécution de la machine relais, par retour de l'appel RPC (2) ainsi débloqué, transmet comme paramètre de sortie le résultat de la fonction exécutée vers la seconde machine.

De cette manière, le procédé selon l'invention peut s'appliquer à l'évidence à une pluralité de machines "client" émettant des appels RPC vers un "pseudo-serveur", chaque machine "client" voyant le couple "serveur"/"pseudo-serveur" comme une machine "serveur". Le dialogue entre la machine "client" et le "pseudo-serveur" est alors autorisé par l'intermédiaire de différentes unités d'exécution de la machine relais.

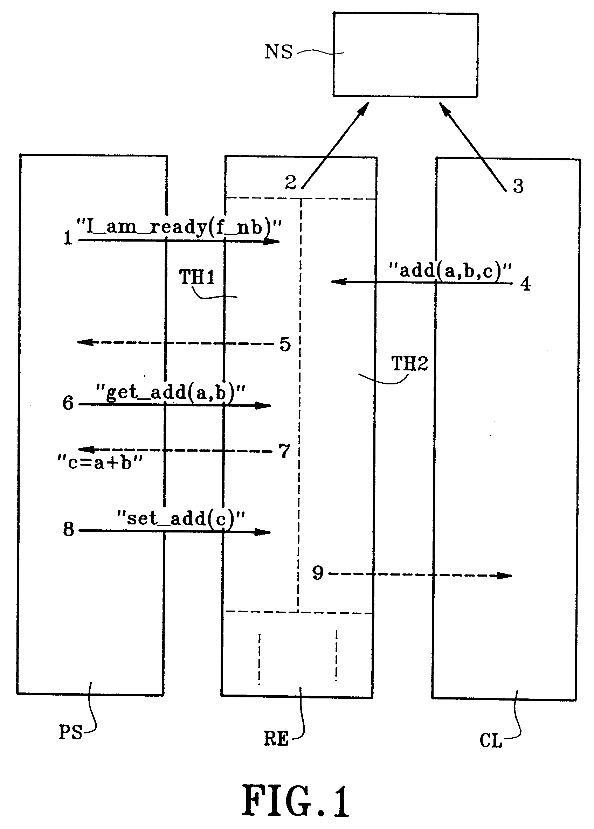

La description suivante en regard du dessin annexé, le tout donné à titre d'exemple non limitatif, fera bien comprendre comment l'invention peut être réalisée.

La figure unique présente de manière schématique, un exemple de dialogue élaboré dans un réseau autour d'appels RPC, entre une première machine "client" utilisée en "serveur" et une seconde machine "client" par l'intermédiaire d'une troisième machine "serveur" utilisée comme relais.

Sur la figure, une première machine PS d'architecture uniquement "client" est désirée être utilisée comme "serveur RPC" ("pseudo-serveur") par une seconde machine CL d'architecture "client". Conformément à l'idée de l'invention, les différents appels RPC sont émis d'abord vers une troisième machine RE dite machine relais, cette machine ayant une architecture "serveur".

De préférence, les machines PS, RE, CL sont des machines de type DCE (DCE est une marque déposée par Open Software Foundation).

De même, de manière préférée mais non limitative, les appels de procédure à distance sont de type standard DCE/RPC. Il est cependant rappelé qu'avantageusement tout type d'appel RPC avec tout autre type de paramètre peut être utilisé selon le présent procédé et par exemple un RPC selon la technologie de Sun Microsystems, un RPC NCS 1.5 Apollo/Hewlett.Packard (NCS : Network Computing System), un RPC selon Netwise, etc...).

Pour une meilleure appréhension du procédé selon l'invention, un exemple simple est ci-après décrit. Dans cet exemple la machine CL demande à la machine PS d'exécuter une fonction d'addition en prenant comme paramètres d'entrée, les paramètres a et b à additionner et comme paramètre de sortie, le paramètre c représentant le résultat de l'addition a et b.

Selon le présent procédé de simulation, dans cet exemple précis, différentes étapes seront parcourues avant d'aboutir au résultat c.

Ainsi, à l'étape 1, la première machine PS émet vers une première unité d'exécution TH1 de la machine relais RE, un appel RPC 1 (représenté par une flèche en trait plein), par exemple du type "I_am_ready(f_nb)", signifiant qu'elle est prête pour l'exécution de fonctions (dont la fonction "add"). L'unité d'exécution TH1 de la machine RE qui reçoit et va donc gérer cet appel RPC1, se met alors en attente d'un signal de réveil qui peut être une variable de condition du type (pthread_cond_wait (cond_var_work)), ce qui a pour effet de bloquer la première machine PS sur l'appel RPC 1.

Lors d'une seconde étape 2, la machine relais RE informe le service de nommage NS que la première machine PS est prête à exécuter la fonction désirée par la seconde machine CL, en l'occurrence ce sera la fonction d'addition "add". Sur la figure, le service de nommage NS est représenté à l'extérieur des machines PS, RE ou CL, cependant il peut être localisé dans l'une quelconque des machines "serveur" du réseau et donc par exemple dans RE.

La seconde machine CL, lors de l'étape 3, va chercher dans un répertoire du service de nommage, couramment appelé CDSD ("Cell Directory Server Daemon") l'adresse (par exemple une adresse Internet) de la fonction à exécuter, dans le cas présent la fonction "add".

Lors de l'étape 4, la seconde machine CL émet à son tour, vers une seconde unité d'exécution TH2 de la machine RE, un appel RPC 2 (représenté par une flèche en trait plein), conforme à la représentation réseau grâce aux talons standards, cet appel correspondant à la fonction à exécuter et comportant les paramètres d'entrée (a, b) et de sortie (c) de ladite fonction. L'appel RPC 2 peut être par exemple du type "add" (a [in], b [in], c [out])". L'unité d'exécution TH2 émet le signal de réveil attendu par la première machine PS (pthread_cond_signal (cond_var_work)) puis se met en attente d'un signal de réveil qui peut être une variable de condition du type (pthread_cond_wait(cond_var_arg) ce qui a pour effet de bloquer la seconde machine CL sur l'appel RPC 2.

La première machine PS est, lors de l'étape 5, renseignée sur le type de fonction à exécuter par retour de l'appel RPC 1 (représenté par une flèche en trait pointillé) ainsi débloqué, le numéro de la fonction, correspondant ici à la fonction "add", lui étant transmis. C'est donc lors de cette étape, que la machine PS sait quelle fonction doit être exécutée, en l'occurrence la fonction "add" et par là même le type de paramètres à demander.

A l'étape 6, la première machine PS émet vers l'unité d'exécution TH1 de la machine RE, un nouvel appel RPC 3 (représenté par une flèche en trait plein) par exemple du type "get_add ([out]a,[out]b)", pour demander les paramètres d'entrée (a,b) de la fonction "add" à exécuter. L'unité d'exécution TH1 demande alors lesdits paramètres à la seconde unité d'exécution TH2 et les obtient via un mécanisme de communication interprocessus du genre "sockets", mémoire partagée avec sémaphores, files de messages, tube de communication appelé également "pipe",... ou intraprocessus par exemple du genre mémoire globale protégée par des verrous.

Lorsque l'unité d'exécution TH1 de la machine RE a obtenu les paramètres d'entrée (a,b) de la fonction "add" à exécuter, elle transmet vers la première machine PS, lors de l'étape 7, lesdits paramètres (a,b) par retour de l'appel RPC 3 (représenté par une flèche en trait pointillé). La machine PS connaît à présent la fonction à exécuter "add" et les paramètres d'entrée a et b et elle exécute l'addition de a et b pour donner le résultat c=a+b.

La première machine PS transmet à l'unité d'exécution TH1 de la machine RE, lors de l'étape 8, le résultat c de la fonction ainsi exécutée, au moyen par exemple de la fonction "set_add ([in]c). L'unité d'exécution TH1 qui connaît à présent le résultat c, le communique à l'unité d'exécution TH2 via un mécanisme de communication interprocessus ("sockets", mémoire partagée avec sémaphores, files de messages, tube de communication appelé également "pipe",...) ou intraprocessus (mémoire globale protégée par des verrous par exemple) puis émet vers ladite unité TH2 le signal de réveil attendu du type (pthread_cond_signal(cond_var_arg)), ce qui aura pour effet de débloquer l'appel RPC 2.

Enfin, lors de l'étape 9, la seconde unité d'exécution TH2 de la machine RE, par retour de l'appel RPC 2 (représenté par une flèche en trait pointillé) ainsi débloqué, transmet, vers la seconde machine CL, comme paramètre de sortie le résultat c=a+b de la fonction "add" exécutée.

En conclusion, comme cela vient d'être vu, le présent procédé qui permet de simuler avantageusement une architecture "serveur" à partir d'une architecture "client" peut être mis en oeuvre de manière aisée et rapide et par conséquent son application est peu onéreuse.

## Revendications

1. Procédé de simulation, dans un réseau, d'une architecture "serveur" à partir d'une architecture "client" d'une première machine pour l'exécution d'appels de procédure à distance RPC émis par au moins une seconde machine d'architecture "client", caractérisé en ce que la première machine émet préalablement un appel RPC vers une troisième machine d'architecture "serveur" utilisée entre la première et la deuxième machines et pour cela appelée machine relais, cet appel RPC ouvrant un contexte de communication pour la suite des échanges alors que ladite première machine se bloque sur ledit appel dans l'attente de son retour, puis lorsque la seconde machine émet un appel RPC représentatif d'une fonction déterminée à exécuter par la première machine, cet appel est transmis vers la machine relais qui après reconnaissance de la fonction à exécuter le retransmet vers la première machine par retour de l'appel RPC bloqué, la première machine demandant alors les paramètres d'entrée de la fonction à exécuter présents dans la machine relais puis exécutant ladite fonction après réception desdits paramètres d'entrée et enfin fournissant, comme paramètre de sortie, le résultat à la seconde machine via la machine relais.

2. Procédé de simulation selon la revendication 1 dans lequel les étapes suivantes sont chronologiquement parcourues :
- la première machine émet vers une première unité d'exécution de la machine relais un appel RPC (1) signifiant qu'elle est prête pour l'exécution de fonctions, l'unité d'exécution de la machine relais qui gère cet appel RPC (1) se met alors en attente d'un signal de réveil et bloque ainsi la première machine sur cet appel RPC (1),
- la machine relais informe le service de nommage que la première machine est prête à exécuter une fonction désirée,
- la seconde machine va chercher dans un répertoire du service de nommage l'adresse de la fonction à exécuter,
- la seconde machine émet alors un appel RPC (2), conforme à la représentation réseau, correspondant à la fonction à exécuter et comportant les paramètres d'entrée et de sortie de ladite fonction, vers une seconde unité d'exécution de la machine relais, cette unité d'exécution se mettant en attente d'un signal de réveil et bloquant ainsi la seconde machine sur cet appel RPC(2) après avoir elle-même émis un signal de réveil vers la première unité d'exécution en attente,
- la première machine est renseignée, par retour de l'appel RPC(1) ainsi débloqué, sur le type de fonction à exécuter,
- la première machine émet un nouvel appel RPC(3), vers la première unité d'exécution de la machine relais pour demander les paramètres d'entrée de la fonction à exécuter, cette unité d'exécution demandant lesdits paramètres à la seconde unité d'exécution de la machine relais via un mécanisme de communication interprocessus ("sockets", mémoire partagée avec sémaphores, files de messages, tube de communication appelé également "pipe",...) ou intraprocessus (mémoire globale protégée par des verrous,...).
- après obtention des paramètres d'entrée de la fonction à exécuter, la première unité d'exécution de la machine relais transmet lesdits paramètres, par retour de l'appel RPC(3), à la première machine qui exécute la fonction,
- la première machine transmet le résultat de la fonction exécutée à la première unité d'exécution de la machine relais qui d'une part le communique à la seconde unité d'exécution via un mécanisme de communication interprocessus ("sockets", mémoire partagée avec sémaphores, files de messages, tube de communication appelé également "pipe",...) ou intraprocessus (mémoire globale protégée par des verrous,...) et d'autre part émet un signal de réveil vers cette seconde unité d'exécution,
- la seconde unité d'exécution de la machine relais, par retour de l'appel RPC (2) ainsi débloqué, transmet comme paramètre de sortie le résultat de la fonction exécutée vers la seconde machine.

3. Procédé de simulation selon la revendication 2 pour lequel les machines sont des machines de type DCE.

4. Procédé de simulation selon la revendication 2 ou 3 dans lequel les appels de procédure à distance sont de type standard DCE/RPC.

5. Procédé de simulation selon la revendication 2 ou 3 dans lequel tout type d'appel de procédure à distance RPC est utilisé pour les communications entre machines.
